# EUROPEAN PATENT SPECIFICATION

(11) **EP 1 146 559 B1**
(45) Date of publication and mention of the grant of the patent: **08.03.2006**
(21) Application number: 00311099.6
(22) Date of filing: 13.12.2000
(51) Int. Cl.: H01L 27/00

(54) **CMOS image sensor having integrated universal serial bus (USB) transceiver**
CMOS-Bildsensor mit integriertem Universal Serial Bus (USB) - Transceiver
Capteur d'images CMOS avec un émetteur-récepteur de bus série universel (USB)

(30) Priority: 12.04.2000 US 547451
(43) Date of publication of application: 17.10.2001
(73) Proprietor: OmniVision Technologies Inc., Sunnyvale, California 94086 (US)
(72) Inventor: Huang, Weifeng, Santa Clara, CA 95051 (US)
(74) Representative: Hackney, Nigel John

(56) References cited:
- WO-A-99/30269
- US-A- 5 926 208
- CONEXANT Data Sheet CN0352, Order No. 6001DSR1, Conexant Systems Inc., 16.04.1999, Retrieved from the Internet: <URL:http://www.conexant.net/data/TechDocs /External/100079A.pdf >, retrieved on [2001-02-09] XP002160019
- CONEXANT Data Sheet CN0352p, Order No. 6003DS, Conexant Systems Inc., 30.06.1998, Retrieved from the Internet: <URL:http://www.conexant.net/data/TechDocs /External/100078A.pdf >, retrieved on [2001-02-09] XP002160030

## Description

The present invention relates to complementary metal oxide semiconductor (CMOS) cameras, and more particularly, to a CMOS camera having integrated circuitry that allows for communication using a universal serial bus (USB).

Integrated circuit technology has revolutionized various fields including computers; control systems, telecommunications, and imaging. In the field of imaging, the development of a CMOS image sensor has made possible the manufacture of low cost imaging devices. One advantage of the CMOS image sensor is the ability to integrate signal processing logic (typically formed in a CMOS process) with the sensing array to form a single chip CMOS image sensor. OmniVision Technologies, Inc., the assignee of the present invention, manufactures a complete line of CMOS image sensors.

In many applications, the images produced by the CMOS image sensor are used by personal computers, Internet appliances, and the like. The Universal Serial Bus (USB) specification is one commonly used protocol for a serial bus that supports data exchange between USB compatible devices. One major advantage of the USB protocol is the ability to support plug and play operation, allowing easy installation of peripherals. Because of the popularity of the USB protocol, many peripheral devices must include an integrated circuit that serves as a USB transceiver for the peripheral. Therefore, in the prior art, USB compliant cameras required at least two integrated circuits: one for the actual CMOS image sensor and a USB transceiver.

An example of an optical device including a CMOS sensor and a USB communication device is disclosed in International patent application publication number WO 99/30269, and it is of a single chip type.

A CMOS camera formed on an integrated circuit is disclosed. The CMOS camera includes: an image sensor formed on the integrated circuit and a universal serial bus (USB) transceiver/controller on the same integrated circuit. Accordingly, the present invention provides a CMOS camera as set forth claim 1.

### 4. Brief Description of the Drawings

Figure 1 is a schematic diagram of a CMOS camera formed in accordance with the present invention.
Figure 2 is a schematic diagram of the image sensor portion of the CMOS camera of Figure 1.

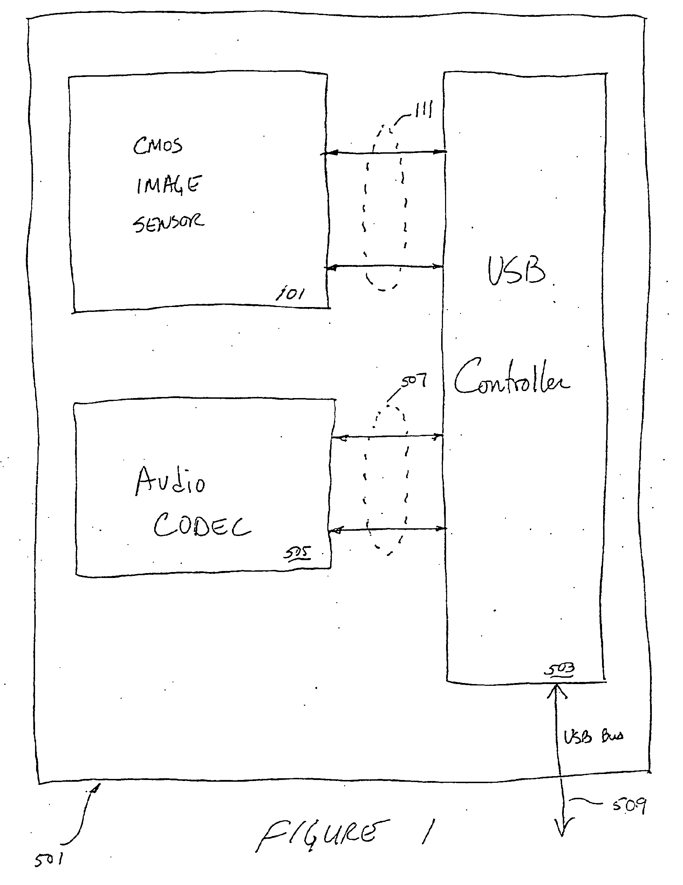

Referring to Figure 1, a CMOS camera 501 formed in accordance with the present invention is shown. The CMOS camera 501 includes an image sensor 101, an audio codec 505, a USB controller 503, an internal bus 111, an audio bus 507, and a USB bus 509.

The USB controller 503 operates to transmit and receive data in accordance with the USB protocol. For this reason, the USB controller 503 is also referred to as a USB transceiver. The USB controller 503 is communicatively connected to the image sensor 101 using the internal bus 111. The image sensor 101 obtains image data and digitizes it for transfer to the USB controller 503 using the internal bus 111.

The USB controller 503 is connected via a USB bus 509 to a USB host device (not shown). Depending upon the USB host's demands, the USB controller 503 transfers packed serial data (comprising the image data) to the USB host through the USB bus 509. The packed serial data that is transferred by the USB controller 503 is digital image data, such as color or black and white images, RGB raw data, RGB composite data, and/or YC_{b}Cᵣ data with or without additional image processingand data compression.

Optionally, memory of some sort, including non-volatile and volatile memory may be incorporated into the CMOS camera 501. The non-volatile and volatile memory may be incorporated in the image sensor 101, the USB controller 503, and/or the audio codec 505 to store data, such as a map of the defective pixels found in the sensing array 103, image data, audio data, a plethora of information regarding the attributes of the CMOS camera 501, and signal processing coefficients.

The USB controller 503 can be of conventional design that is available from multiple vendors that have developed USB controllers. Optionally, image/signal processing, data compression, non-volatile and/or volatile memory may be incorporated into the USB controller 503. Alternatively, the USB controller 503 may be of substantially similar design to the Model OV511 product designed and manufactured by Omnivision Technologies, Inc.

Other functions may also be integrated within the CMOS camera 501. For example, in the preferred embodiment shown in Figure 1, an audio codec 505 is included to perform bi-directional transferring of audio data separately or simultaneously. The audio codec 505 allows digitizing, processing, storing and transferring of audio data along with the image data from the image sensor 101. The audio codec 505 also allows playback of audio data stored in the non-volatile or volatile memory portion of the CMOS camera 501 or audio data transferred by the USB controller 503 via the USB bus 509. The audio codec 505 is also of conventional design and communicates to the USB controller 503 via the audio bus 507.

The CMOS camera 501 can either be controlled by the USB host through the USB bus 509 with reading or writing parameters or commands, or alternatively, be controlled locally as a stand alone camera, for example, by hard wired logic, programmable logic, or I/O pins.

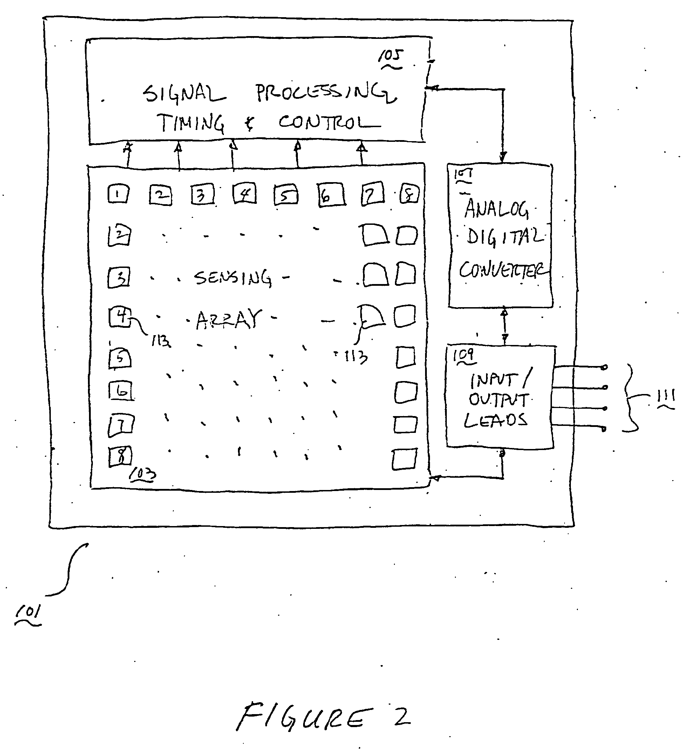

Figure 2 illustrates in greater detail the image sensor 101 shown in Figure 1. The image sensor 101 includes a sensing array 103, signal processing, timing, and control area 105, analog to digital converter (ADC) 107, and input/output section 109.

The sensing array 103 includes a plurality of individual pixels 113 arranged in a two-dimensional array. In the diagram of Figure 1, the sensing array 103 has 8 columns and 8 rows. The image sensor 101 also includes signal processing; timing, and control area 105. As the name implies, this portion of the image sensor 101 contains the logic and other integrated circuit devices that perform the reading out of the sensing array 103, signal processing of the data read out from the sensing array 103, and various timing and other control functions.

Input/output portion 109 is used by the image sensor 101 to communicate with the USB controller 503 using internal bus 111. As already discussed above, the internal bus 111 is used to primarily transfer image data to the USB controller 503. The internal bus is also used for control signals that, for example, can be used to configure the functionality/modality of the image sensor 101.

## Claims

1. A CMOS camera (501) formed on an integrated circuit, said CMOS camera including:
an image sensor (101) formed on said integrated circuit;
an audio codec (505) formed on said integrated circuit; and
a universal serial bus (USB) controller (503) on said integrated circuit;
wherein said image sensor (101) and said audio codec (505) provide output signals to the USB controller (503), said USB controller processing said output signals into USB format, and providing output signals in USB format for output from said integrated circuit.

2. A CMOS camera (501) according to Claim 1, wherein said CMOS camera is controllable through the USB controller (503) with reading or writing parameters or commands, or by control means selected from the group comprising hard wired logic, programmable logic, and input/output pins.

## Patentansprüche

1. Auf einer integrierten Schaltung ausgebildete CMOS-Kamera (501), welche CMOS-Kamera Folgendes umfasst:
einen Bildsensor (101), der auf der integrierten Schaltung ausgebildet ist;
einen Audio-Codec (505), der auf der integrierten Schaltung ausgebildet ist; und
einen Universal-Serial-Bus-(USB-) Controller (503) auf der integrierten Schaltung;
worin der Bildsensor (101) und der Audio-Codec (505) Ausgangssignale für den USB-Controller (503) bereitstellen, wobei der USB-Controller die Ausgangssignale zu einem USB-Format verarbeitet und Ausgangssignale im USB-Format zur Ausgabe aus der integrierten Schaltung bereitstellt.

2. CMOS-Kamera (501) nach Anspruch 1, worin die CMOS-Kamera über den USB-Controller (503) mit Lese- oder Schreibparametern oder -befehlen oder durch Steuermittel, die aus der eine festverdrahtete Logik, programmierbare Logik und Ein/Ausgabe-Anschlussstifte umfassenden Gruppe ausgewählt sind, steuerbar ist.

## Revendications

1. Un appareil de prise de vue s CMOS (501) formé sur un circuit intégré, ledit dispositif de prise de vues CMOS comprenant:
un capteur d'images (101) formé sur ledit circuit intégré;
un codeur-décodeur audio (505) formé sur ledit circuit intégré; et
un organe de commande (503) Bus Série Universel (USB) sur ledit circuit intégré;
où ledit capteur d'images (101) et ledit codeur - décodeur audio (505) fournissent des signaux de sortie à l'organe de commande USB (503), ledit organe de commande USB traitant lesdits signaux de sortie pour les amener en format USB, et fournissant des signaux de sortie en format USB pour sortir dudit circuit intégré.

2. Un appareil de prise de vue s CMOS (501) selon la revendication 1, dans lequel ledit appareil de prise de vues CMOS peut être commandé par l'intermédiaire d'un organe de commande USB (503) avec des paramètres ou des instructions de lecture ou d'écriture, ou par des moyens de commande sélectionnés dans le groupe se composant d'une logique câblée, d'une logique programmable, et de broches entrée/sortie.
